# EUROPÄISCHE PATENTANMELDUNG

(11) **EP 1 357 519 A2**
(43) Veröffentlichungstag der Anmeldung: **29.10.2003**
(21) Anmeldenummer: 03008945.2
(22) Anmeldetag: 16.04.2003
(51) Int. Cl.: G07C 9/00, B60R 25/00

(54) **Sicherungssystem**

(30) Priorität: 24.04.2002 DE 10218314
(71) Anmelder: Delphi Technologies, Inc., Troy, MI 48007 (US)
(72) Erfinder: Wiethege, Eric, 51427 Bergisch Gladbach (DE)
(74) Vertreter: Manitz, Finsterwald & Partner GbR

(57) **Zusammenfassung**

Ein Sicherungssystem insbesondere für Kraftfahrzeuge umfasst einen insbesondere einem Kraftfahrzeug zugeordneten ersten Transceiver zur Kommunikation mit einem einer tragbaren Bedienungseinrichtung zugeordneten zweiten Transceiver über eine bidirektionale Funkstrecke. Dabei sind den Transceivern Antennen zugeordnet, von denen zumindest eine hinsichtlich ihrer Reichweite variabel einstellbar ist.

## Beschreibung

Die Erfindung betrifft ein Sicherungssystem insbesondere für Kraftfahrzeuge.

Es sind bereits Sicherungssysteme für einen schlüssellosen Zugang (keyless entry) bekannt, bei denen mittels einer den Schlüssel ersetzenden, der Benutzeridentifikation dienenden Einrichtung (CID = Customer Identification Device) wie beispielsweise einer Chipkarte z.B. die Türen und der Kofferraum des betreffenden Kraftfahrzeugs geöffnet und dessen Motor gestartet werden können. Dabei werden zwischen wenigstens einem im Kraftfahrzeug integrierten Sender und der CID Sende- und Antwortsignale gewechselt. Bevor eine jeweilige Funktion ausgeführt werden kann, wird der von der CID übermittelte Identifikationscode geprüft. Dabei wird für die Ausführung zumindest eines Teils der Funktionen gefordert, dass der eine gültige CID bei sich tragende Benutzer sich im Nahbereich des Kraftfahrzeugs oder innerhalb des Kraftfahrzeugs befindet. Bei einem solchen System für einen schlüssellosen Zugang kann es sich insbesondere um ein NF/HF-System (z.B. 125 kHz, ... MHz) handeln. Sind den Kraftfahrzeugen beispielsweise NF (z.B. 125 kHz) -Antennen zugeordnet, so müssen beispielsweise diese NF-Antennen auf die betreffende geringe Reichweite, z.B. auf den Innenraum des Kraftfahrzeugs, abgestimmt sein, um feststellen zu können, dass die CID mit dem NF/HF-Transmitter für den Benutzer sich nicht außerhalb der betreffenden Antennenreichweite, sondern innerhalb des Kraftfahrzeugs befindet.

Bei den bisher bekannten Systemen ist insbesondere von Nachteil, dass für unterschiedliche Fahrzeug- und/oder Fahrzeugkarosserietypen eine entsprechende Anzahl unterschiedlicher Versionen für die elektronische Steuereinheit (ECU = electronic control unit) bereitgestellt werden muss.

Ziel der Erfindung ist es, ein verbessertes und kostengünstigeres Sicherungssystem zu schaffen, bei dem die zuvor genannten Nachteile beseitigt sind.

Diese Aufgabe wird erfindungsgemäß gelöst durch ein Sicherungssystem insbesondere für Kraftfahrzeuge, mit einem insbesondere einem Kraftfahrzeug zugeordneten ersten Transceiver zur Kommunikation mit einem einer tragbaren Bedienungseinrichtung zugeordneten zweiten Transceiver über eine bidirektionale Funkstrecke, wobei den Transceivern Antennen zugeordnet sind, von denen zumindest eine hinsichtlich ihrer Reichweite variabel einstellbar ist.

Dabei kann die Reichweite an die jeweilige Antenne insbesondere über eine entsprechende Hardware und/oder eine entsprechende Software insbesondere mittels eines Mikrocomputers oder -controllers variabel einstellbar sein.

Bei einer bevorzugten praktischen Ausführungsform des erfindungsgemäßen Sicherungssystems ist die Reichweite einer jeweiligen Antenne über deren Sendeleistung variabel einstellbar.

Zweckmäßigerweise ist die Reichweite einer jeweiligen Antenne über deren Antennenstrom variabel einstellbar. Dabei kann der Antennenstrom beispielsweise über verschiedene Widerstände bzw. verschiedene Widerstandseinstellungen entsprechend eingestellt werden.

Die Antennenleistung kann also beispielsweise über eine entsprechende Reduzierung des Antennenstroms mit unterschiedlichen Widerständen bzw. Widerstandswerten entsprechend verringert werden. Im Ergebnis erhält somit jede Fahrzeugkarosserieart eine eigene Widerstandseinstellung.

Vorteilhafterweise sind für verschiedene Fahrzeugkarosserietypen unterschiedliche Widerstandseinstellungen bzw. unterschiedliche Parametereinstellungen vorgebbar.

So können beispielsweise in einer elektronischen Steuereinheit (ECU) unterschiedliche Widerstandseinstellungen bzw. unterschiedliche Parametereinstellungen für verschiedene Fahrzeugkarosserietypen bereitgestellt sein. Aus den verschiedenen in der elektronischen Steuereinheit bereitgestellten Widerstands- bzw. Parametereinstellungen kann dann die jeweils gewünschte Einstellung ausgewählt werden. Eine entsprechende Auswahl ist beispielsweise durch die Benutzer-EOL (end of line) möglich. Auf diese Art und Weise kann die Anzahl verschiedener Versionen der elektronischen Steuereinheit (ECU) für den Lieferanten und den Verbraucher entsprechend reduziert werden.

Von Vorteil ist auch, wenn die jeweiligen Softwareparameter programmierbar sind, wozu vorzugsweise wenigstens ein EEPROM-Speicher vorgesehen ist. Wie bereits erwähnt kann die Antennenreichweite durch eine entsprechende Hardware und/oder durch eine entsprechende Software insbesondere mittels eines Mikrocomputers oder -controllers variabel einstellbar bzw. veränderbar sein.

Bei einer bevorzugten praktischen Ausführungsform des erfindungsgemäßen Sicherungssystems ist der Resonanzkreis der variabel einstellbaren Antenne durch ein Rechtecksignal gespeist. In diesem Fall ist die Reichweite einer jeweiligen Antenne vorteilhafterweise über das Tastverhältnis des Rechtecksignals variabel einstellbar. Über dieses Tastverhältnis kann somit beispielsweise die Stärke eines jeweiligen Antennensendefeldes entsprechend geändert oder eingestellt werden. Die Periode des Rechtecksignals wird hierbei vorzugsweise konstant gehalten. Die maximale Reichweite kann beispielsweise bei einem Tastverhältnis 1:1 gegeben sein.

Bei einer bevorzugten praktischen Ausführungsform des erfindungsgemäßen Sicherungssystems ist die Reichweite wenigstens einer einem Kraftfahrzeug zugeordneten Antenne so einstellbar, dass über den betreffenden Transceiver feststellbar ist, ob die tragbare Bedienungseinrichtung sich innerhalb oder außerhalb des Kraftfahrzeugs befindet.

Grundsätzlich kann die Reichweite einer jeweiligen Antenne insbesondere auch so einstellbar sein, dass über den betreffenden Transceiver feststellbar ist, ob die tragbare Bedienungseinrichtung sich innerhalb oder außerhalb eines vorgebbaren Nahbereichs des Kraftfahrzeugs befindet.

Die tragbare Bedienungseinrichtung kann vorteilhafterweise durch eine der Benutzeridentifikation dienende Einrichtung (CID) gebildet sein.

Im übrigen kann das Sicherungssystem in beliebiger Weise ausgeführt sein.

So kann die Reichweite der bidirektionalen Funkstrecke beispielsweise für vom zweiten Transceiver ausgesandte Befehlssignale größer sein als die Reichweite für auf den Empfang solcher Befehlssignale hin vom ersten Transceiver ausgesandte Rückfragesignale.

Es kann beispielsweise ein Satz von Befehlen existieren, die in zumindest zwei Befehls- bzw. Funktionskategorien unterteilt werden können. Die Unterteilung kann beispielsweise nach dem Kriterium erfolgen, aus welcher Entfernung ein jeweiliger Befehl (z.B. Ansteuern der elektrischen Fensterheber, Ansteuern der Zentralverriegelung, Ansteuern des Lenkradschlosses, usw.) ausgeführt werden darf. Die entsprechenden Befehlssätze können beispielsweise in dem der tragbaren Bedienungseinrichtung zugeordneten zweiten Tranceiver gespeichert sein und beispielsweise über ein Bedienfeld dieses Transceivers abgerufen werden.

Überdies ist es beispielsweise denkbar, dass die vom dem Fahrzeug zugeordneten ersten Transceiver empfangenen Befehle in einer diesem ersten Transceiver zugeordneten, im Fahrzeug installierten elektronischen Steuereinheit (ECU) daraufhin ausgewertet werden, ob sie beispielsweise einer ersten Kategorie (z.B. Fahrzeugtür verriegeln) von Befehlen, die auch noch bei einem einer größeren Reichweite entsprechenden größeren gegenseitigen Abstand der beiden Transceiver ausgeführt werden dürfen, oder beispielsweise einer zweiten Kategorie von Befehlen zuzuordnen sind, die nur bei sich innerhalb einer kleineren Reichweite befindender Bedienungseinrichtung ausgeführt werden dürfen. Der gegenseitige Abstand der beiden Transceiver muss im zweiten Fall also entsprechend kleiner sein.

Wir nun vom ersten Transceiver ein Befehl empfangen, der durch die elektronische Steuereinheit der ersten Befehlskategorie zugeordnet werden kann, so wird dieser Befehl über die elektronische Steuereinheit direkt ausgeführt. Dabei ist beispielsweise denkbar, dass vom ersten Transceiver jeweils nur dann ein Rückfragesignal ausgesandt wird, wenn der jeweilige empfangene Befehl von der elektronischen Steuereinheit einer zweiten Befehlskategorie zugeordnet wurde.

Der zweite Transceiver sendet auf den Empfang einer Rückfrage hin beispielsweise ein Bestätigungssignal aus, auf dessen Empfang durch den ersten Transceiver hin der betreffende, einer zweiten Befehlskategorie zugeordnete Befehl ausgeführt wird. Falls das Rückfragesignal von dem der Bedienungseinrichtung zugeordneten zweiten Transceiver nicht empfangen wird, liegt dieser außerhalb der für Befehle der zweiten Befehlskategorie geltenden kleineren Reichweite. Der betreffende Befehl wird in diesem Fall nicht ausgeführt.

An den dem Kraftfahrzeug zugeordneten ersten Transceiver können beispielsweise auch verschiedene Antennen angeschlossen sein. So können z.B. an verschiedenen Stellen des Kraftfahrzeugs wie beispielsweise an den seitlichen Türen sowie am Kofferraumdeckel positionierte Antennen einem durch eine kleinere Reichweite definierten Bereich und beispielsweise eine weitere Antenne einem durch eine größere Reichweite definierten Bereich zugeordnet sein.

Es können beispielsweise auch mehrere, unterschiedlichen kleineren Reichweiten zugeordnete zweite Befehlskategorien vorgesehen sein. In diesem Fall können die kleineren Reichweiten der Funkstrecke für die vom ersten Transceiver auf den Empfang entsprechender Befehle hin ausgesandten Rückfragen je nachdem, welche dieser zweiten Befehlskategorien der jeweils empfangene Befehl zuzuordnen ist, entsprechend unterschiedlich gewählt sein.

Auch die tragbare Bedienungseinrichtung kann mit einer elektronischen Steuereinheit bzw. Steuer- und/oder Auswerteeinheit versehen sein.

Grundsätzlich kann auch eine der tragbaren Bedienungseinrichtung zugeordnete Antenne variabel einstellbar sein.

Die Frequenzen der von den beiden Transceivern ausgesandten Signale können voneinander verschieden oder auch gleich sein.

Wie bereits erwähnt kann das Sicherungssystem insbesondere Teil eines schlüssellosen Zugangssystems sein. Dabei kann die tragbare Bedienungseinrichtung insbesondere auch der Benutzeridentifikation dienende Mittel umfassen.

Grundsätzlich sind jedoch auch beliebige andere Ausführungsformen des erfindungsgemäßen Sicherungssystems denkbar.

## Patentansprüche

1. Sicherungssystem insbesondere für Kraftfahrzeuge, mit einem insbesondere einem Kraftfahrzeug zugeordneten ersten Transceiver zur Kommunikation mit einem einer tragbaren Bedienungseinrichtung zugeordneten zweiten Transceiver über eine bidirektionale Funkstrecke, wobei den Tranceivern Antennen zugeordnet sind, von denen zumindest eine hinsichtlich ihrer Reichweite variabel einstellbar ist.

2. Sicherungssystem nach Anspruch 1,
**dadurch gekennzeichnet,**
**dass** die Reichweite einer jeweiligen Antenne über eine entsprechende Hardware und/oder eine entsprechende Software insbesondere mittels eines Mikrocomputers oder -controllers variabel einstellbar ist.

3. Sicherungssystem nach Anspruch 1 oder 2,
**dadurch gekennzeichnet,**
**dass** die Reichweite einer jeweiligen Antenne über deren Sendeleistung variabel einstellbar ist.

4. Sicherungssystem nach einem der vorhergehenden Ansprüche,
**dadurch gekennzeichnet,**
**dass** die Reichweite einer jeweiligen Antenne über deren Antennenstrom variabel einstellbar ist.

5. Sicherungssystem nach Anspruch 4,
**dadurch gekennzeichnet,**
**dass** der Antennenstrom über verschiedene Widerstände bzw. verschiedene Widerstandseinstellungen variabel einstellbar ist.

6. Sicherungssystem nach Anspruch 5,
**dadurch gekennzeichnet,**
**dass** für verschiedene Fahrzeugkarosserietypen unterschiedliche Widerstandseinstellungen bzw. unterschiedliche Parametereinstellungen vorgebbar sind.

7. Sicherungssystem nach einem der vorhergehenden Ansprüche,
**dadurch gekennzeichnet,**
**dass** in einer elektronischen Steuereinheit unterschiedliche Widerstandseinstellungen bzw. unterschiedliche Parametereinstellungen für verschiedene Fahrzeugkarosserietypen bereitgestellt sind.

8. Sicherungssystem nach Anspruch 7,
**dadurch gekennzeichnet,**
**dass** aus den verschiedenen in der elektronischen Steuereinheit bereitgestellten Widerstands- bzw. Parametereinstellungen die jeweils gewünschte Einstellung auswählbar ist.

9. Sicherungssystem nach einem der vorhergehenden Ansprüche,
**dadurch gekennzeichnet,**
**dass** die jeweiligen Softwareparameter programmierbar sind, wozu vorzugsweise wenigstens ein EEPROM-Speicher vorgesehen ist.

10. Sicherungssystem nach einem der vorhergehenden Ansprüche,
**dadurch gekennzeichnet,**
**dass** der Resonanzkreis der variabel einstellbaren Antenne durch ein Rechtecksignal gespeist ist.

11. Sicherungssystem nach Anspruch 10,
**dadurch gekennzeichnet,**
**dass** die Reichweite einer jeweiligen Antenne über das Tastverhältnis des Rechtecksignals variabel einstellbar ist.

12. Sicherungssystem nach Anspruch 10 oder 11,
**dadurch gekennzeichnet,**
**dass** die Periode des Rechtecksignals konstant gehalten ist.

13. Sicherungssystem nach einem der vorhergehenden Ansprüche,
**dadurch gekennzeichnet,**
**dass** die maximale Reichweite bei einem Tastverhältnis 1 : 1 gegeben ist.

14. Sicherungssystem nach einem der vorhergehenden Ansprüche,
**dadurch gekennzeichnet,**
**dass** die Reichweite wenigstens einer einem Kraftfahrzeug zugeordneten Antenne so einstellbar ist, dass über den betreffenden Transceiver feststellbar ist, ob die tragbare Bedienungseinrichtung sich innerhalb oder außerhalb des Kraftfahrzeugs befindet.

15. Sicherungssystem nach einem der vorhergehenden Ansprüche,
**dadurch gekennzeichnet,**
**dass** die Reichweite wenigstens einer einem Kraftfahrzeug zugeordneten Antenne so einstellbar ist, dass über den betreffenden Transceiver feststellbar ist, ob die tragbare Bedienungseinrichtung sich innerhalb oder außerhalb eines vorgebbaren Nahbereichs des Kraftfahrzeugs befindet.

16. Sicherungssystem nach einem der vorhergehenden Ansprüche,
**dadurch gekennzeichnet,**
**dass** die tragbare Bedienungseinrichtung durch eine der Benutzeridentifikation dienende Einrichtung gebildet ist.
